# EUROPEAN PATENT SPECIFICATION

(11) **EP 0 906 349 B1**
(45) Date of publication and mention of the grant of the patent: **27.11.2002**
(21) Application number: 97932564.4
(22) Date of filing: 19.06.1997
(51) Int. Cl.: C08F 10/00, C08F 4/02, B01J 37/00, B01J 31/22

(54) **AGGREGATE SUPPORTS AND OLEFIN POLYMERIZATION CATALYSTS SUPPORTED THEREON**
AGGREGATTRÄGER UND DARAUF ANGEBRACHTE OLEFINPOLYMERISATIONSKATALYSATOREN
SUPPORTS D'AGREGATS PORTANT DES CATALYSEURS DE POLYMERISATION D'OLEFINES

(30) Priority: 21.06.1996 US 667553
(43) Date of publication of application: 07.04.1999
(73) Proprietor: W.R. GRACE & CO.-CONN., New York New York 10036 (US)
(72) Inventor: DENTON, Dean, Alexander, Baltimore, MD 21229 (US); CARNEY, Michael, J., Eldersburg, MD 21784 (US)
(74) Representative: Senior, Alan Murray
(86) International application number: PCT/US97/11951
(87) International publication number: WO 97/048742

(56) References cited:
- EP-A- 0 698 622
- WO-A-93/23438
- WO-A-96/34062
- US-A- 4 070 286

## Description

### BACKGROUND OF THE INVENTION

The present invention relates to novel aggregate support compositions that are particularly useful for polyolefin polymerization catalysts. The present invention further relates to a novel method for making the novel aggregate support composition.

Using different support materials with different physical characteristics is known in the art. Agglomerated catalytic support materials and catalysts have been prepared by a variety of methods. For example, Grace Davison, a business unit of W.R. Grace & Co. currently offers several agglomerated catalytic support materials that are prepared by spray drying an aqueous slurry of various sizes of milled particles of silica hydrogels, e.g., Davison 948. These products typically have an AQI of less than 10. Additionally, U.S. Patent No. 4,228,260 discloses a process for preparing a porous pure silica suitable for use with chromium oxide catalysts. The process described therein is of converting a silicon-halogen compound to a non-porous silica by flame hydrolysis and then admixing with water to form a silica gel. The gel is then spray dried to achieve the required particle size and pore volume. U.S. Patent No. 4,657,880 discloses a high surface area agglomerate of porous silica particles wherein the particle is sintered to provide appreciable density and strength. U.S. Patent 4,902,666 discloses a method to prepare strong spheroidal solid agglomerates, typically 1-5 mm, containing alumina or a mixture of alumina and at least one other inorganic material. These agglomerates are formed from micron-sized particles fused together to make polylobed agglomerate particles having a diameter of 0.5mm or larger. U.S. Patent No. 4,704,374 discloses a method of making large spheroidal silica particulates produced from a mixture of xerogel or aerogel with silica hydrosol. These are particles from 1-10 mm in size and have a pore volume of 0.05 to 1.1 cc/g in pores having a pore diameter of less than 1000 Angstroms. Consequently, the thus produced particle is a large mechanically strong particle that is predominantly silica material.

Each support must typically be selected in view of the final polymer sought. Small primary particle size is desirable to reduce faults and blemishes in the polymer product from silica residues. Severe milling of hydrogel, which produces a broad particle size distribution, will reduce primary particle size, but can reduce the pore volume below acceptable levels for use as a catalyst. Use of small catalyst particles (i.e., 5-10 µm) increases catalytic activity. However, slurry loop and gas phase polymerisation processes require larger particle size (40-100 µm and above) for optimum operation. Accordingly, an ideal catalyst would combine small particle size attributes in a larger, more readily handled catalyst particle.

### Summary of the Invention

The present invention relates to a novel catalyst aggregate support and catalyst material having macroporosity and that provides an active catalytic particle that is more active than the typical agglomerated support materials. It is believed the aggregate particles of the present invention fragment readily in the polymerisation reactor, leading to high activity. This novel aggregate particle further combines the benefits of a large particle for handling purposes and a small particle and narrow particle size distribution for polymer reactor purposes leading to a more homogeneous polymer (with respect to molecular weight and composition) having better film appearance.

In one embodiment the present invention provides a catalyst support agglomerate particles readily fragmentable during a polymerisation reaction comprising:
(A) inorganic oxide selected from the group consisting of talc, silica, titania, silica-alumina, silica-chromia, silica-chromia-titania, silica-titania, silica-titania-alumina, zirconia, aluminum phosphate gel and mixtures thereof, and
(B) milled hydrogel binder, wherein
   (1) the support agglomerate particles are derived from spray drying an aqueous slurry comprising inorganic oxide, binder, and solvent;
   (2) the support agglomerate particles possess:
      (i) an average particle size in the range of about 5 to about 250 µm;
      (ii) a surface area of from about 100 to about 1000m² per gram;
      (iii) a pore volume of from about 0.5 to 3.0 cc/g in pores having a pore diameter under 100 nm; and
      (iv) an AQI from 15 to 70; and
   (3) the constituent inorganic oxide particles from which the agglomerate support particles are derived have an average particle size, prior to spray drying, of from about 1 to 25 µm.

In another embodiment the invention provides a catalyst composition comprising catalyst support agglomerate particles and a catalytically active metal component selected from the group consisting of chromium compound, Ziegler-Natta, metallocene, Ni based complexes, Pd based complexes and mixtures thereof wherein the catalyst support agglomerate particles comprise:
(A) inorganic oxide selected from the group consisting of talc, silica, titania, silica-alumina, silica-chromia, silica-chromic-titanic, silica-titania, silica-titania-alumina, zirconia, aluminum phosphate gel and mixtures thereof, and
(B) milled hydrogel binder,
(C) and wherein
   (1) the support agglomerate particles are derived from spray drying an aqueous slurry comprising inorganic oxide, binder, and solvent;
   (2) the support agglomerate particles possess:
      (i) an average particle size in the range of about 5 to about 250 µm;
      (ii) a surface area of from about 100 to about 1000 m² per gram;
      (iii) a pore volume of from about 0.5 to 3.0 cc/g in pores having a pore diameter under 100 nm; and
      (iv) an AQI from 15 to 70; and
   (3) the constituent inorganic oxide particles from which the agglomerate support particles are derived have an average particle size, prior to spray drying, of from about 1 to 25 µm.

In a further embodiment the present invention provides a method for making support agglomerate particles which comprises:
(A) providing an aqueous slurry comprising inorganic oxide support particles having an average particle size of 1 to 25 µm, and milled silica gel binder particles, wherein the inorganic oxide support particles are selected from the group consisting of talc, silica, titania, silica-alumina, silica-chromia, silica-chromia-titania, silica-titania, silica-titania-alumina, zirconia, aluminum, phosphate gel, and mixtures thereof; and
(B) spray drying the slurry prepared in accordance with step (A) to form readily fragmentable agglomerate particles having an average particle size in the range of about 5 to about 250 µm; a surface area of from about 100 to about 1000 m² per gram; a pore volume of from about 0.5 to 3.0 cc/g in pores having a pore diameter under 100 nm and an AQI from 15 to 70.

In a yet further embodiment, the invention provides a method of producing a catalyst composition comprising the steps of:
(A) preparing an aqueous slurry of inorganic oxide support particles and milled hydrogel binder, wherein the support particles are selected from the group consisting of talc, silica, titania, silica-alumina, silica-chromia, silica-chromia-titania, silica-titania, silica-titania-alumina, zirconia, aluminum phosphate gel, and mixtures thereof, and the average size of the support particles is from 1 to 25 µm;
(B) spray drying the slurry from step (A) to create agglomerate particles having a surface area from about 100-1000 m²/g, a particle size of from 5-250 µm, and an AQI of from 15 to 70; and
(C) providing catalytically active material in at least one of the following ways:
   (1) adding catalytically active material and, optionally, appropriate co-catalysts or activator for the catalytically active material, to the slurry before spray drying; or
   (2) impregnating the resultant agglomerate particles with a catalytically active material and, optionally, appropriate co-catalyst or activator for the catalytically active material, to the slurry after spray drying.

### DETAILED DESCRIPTION OF THE INVENTION

### The Support Composition

The aggregate (agglomerate) catalyst support composition of the invention has a surface area from about 100-1000 m²/g, preferably from about 150-800 m²/g, and more preferably from 200-700 m²/g. The aggregate has an average particle size of from 5-250 µm, preferably of from 10-120 µm, and a pore volume of from 0.50 to 3.0 cc/g in pores having pore diameters under about 100 nm, and an AQI hardness of from 15-70.

The aggregate particles comprise the following components:
1) solid porous particles(also referred to herein as support particles), having an average particle size from 1-25 µm, and most preferably of from 1-10 µm; in the most preferred embodiment, the particle size distribution of the support particles is preferable such that 10% are at least 1 µm, 50% are less than 5 µm, and 90% are less than 9 µm.
2) a binder to loosely bind the particles from 1) together.

Inorganic oxide support materials include talcs, silicas, titania, silica chromia, silica chromia titania, silica-alumina, silica-titania, silica-titania-alumina, zirconia, silanized silica, aluminium phosphate gels and mixtures thereof. Preferred support materials are silica hydrogels, silica xerogels, silica aerogels, silica cogels and tergels (e.g., Si-Cr-Ti, Si-Ti and Si-Cr gels). Additional suitable silicas include silanized, fumed or precipitated silicas.

In general, silica hydrogels (a.k.a. aquagels) are silica gels formed in a liquid medium which has its pores filled with that liquid medium. A xerogel is a hydrogel with the liquid medium removed. An aerogel is a special type of xerogel which has the liquid removed in a manner that prevents the collapsing of the pore or a change in the pore structure. Colloidal or hydrosol silica are terms that refer to stable dispersions or sols of discrete particles of amorphous silicas. Precipitated silica is formed when the ultimate silica particles are coagulated as loose aggregates in an aqueous medium, recovered, washed and dried. Fumed silica (a.k.a., aerosils) is a powdered silica made by condensing silica from the vapor phase at elevated temperatures. Silanized silica can be any silica wherein any of the hydrogens in the hydroxy groups in the silica structure are replaced with SiR₃, where the R is a hydrogen and/or alkyl groups, thereby silanizing Si in the base silica.

Preferably, the support particles are compositions conventionally used as catalyst support materials. The degree of porosity in the support may be any level that is achievable in the starting material and desirable in the finished product. Preferably, the support particles of the present invention have a pore volume of at least 0.5 cc/g; preferably more than 0.8 cc/g; and more preferably from about 1.1 to 3 cc/g.

Pore volume and surface area, for example can be measured from volume of nitrogen gas adsorbed in accordance with the BET method.

The binder material suitable for use in this invention is a binder that can be spray dried and that will continue to hold together the support particles in a loose aggregate as defined above. The binder is preferably selected from the group of silica oxide materials having from 5-100% by weight solids. These silica oxide materials can be hydrogels, hydrosol, fumed silica, precipitated silica, aluminium sols, and mixtures thereof, preferably milled hydrogels. Other suitable binder materials include silica co-gels or tergels containing chromium, aluminium, titanium and mixtures thereof. For example, U.S. Patent No. 3,887,494 teaches one method preparing SiO₂- TiO₂ cogel. Preparation of these silicas are well known to those of ordinary skill. Many may be purchased from various suppliers such as Grace Davison, a business unit of W.R. Grace & Co. Fumed silica is available from Cabot Corp. under the "Cab-o-sil" name.

The binder may have particles within it and such particles should be of such a size to be compatible with the support particle size.

### The Catalyst Composition

In another embodiment, the catalytic support material of the present invention is useful to support a variety of catalytically active materials such a Chromium, Ziegler-Natta, Metallocene, Ni based complexes, Pd based complexes catalyst systems and mixtures thereof.

Chromium catalyst can be made by several methods. For example, a chromium containing silica gel (e.g., Si-Cr co-gels or Ti-Cr-Si tergels) can be used as the starting support particle; alternatively, a chromium containing solution can be added to the slurry (before spray drying, e.g., in step 1). Chromium catalysts can also be prepared by impregnating the aggregate support with a solution of chromium oxide, a compound that can be converted into chromium oxide or a composition containing chromium oxide, drying the impregnated aggregate particles and activating the catalyst composition between 400-1000°C. Preferable compounds that can be converted into chromium oxide include chromium acetate, chromium nitrate, chromium acetylacetonate and mixtures thereof.

Co-gels such as Ti-Si and tergels such as Ti-Cr-Si can be used as the starting support materials to prepare a support for use as in Ziegler-Natta catalytic systems. In addition, Ziegler-Natta, Ni based complexes, Pd based complexes and metallocene catalysts species can likewise be impregnated onto the aggregate particles using well known techniques depending on the final catalytic system desired.

Thus, the catalytically active material, and optionally an appropriate co-catalyst or activator, may be incorporated into the aggregate support by adding the catalytically active material, co-catalyst, and/or activator to the slurry before spray drying, or by impregnation of the aggregate support after spray drying.

### The Method of Making the Support Aggregate

The method of reducing the loose aggregate support composition comprises the following steps:
1) preparing a slurry in a suitable solvent of the support materials as described above having a pH that can be basic, neutral or acidic depending on the support particles and binder selected. Preferably, the pH is from 2-9, with the. preferred pH from 7-8. The slurry may optionally contain manufacturing aids such as surfactants. The slurry is preferably from 35-90% by weight solvent and has a solids content of from 10-65% by weight, preferably from 10-40 Wt. % solids, and most preferably from 10-20 Wt. % solids.
   Suitable solvents include water, hydrocarbons (including C5-C10 alkanes, preferably heptane, hexane, and octanes); aromatics (preferably toluene and benzene); alcohols, glycol ethers and esters, (preferably as isopropyl alcohol, hexanol, n-butoxy propanol, t-butoxy propanol; ethoxy ethyl acetate, methoxy propyl acetates, and ethoxy ethyl propionate); and mixtures of the foregoing. The preferred solvent is water.
   Processing aids such as surfactants can be added to the slurry when needed. One suitable surfactant is Igepal ®, a proprietary polyethylene glycol composition that can be purchased from Rhone Poulenc Corp.
2) Spray dry the slurry from step 1) to create the loose aggregate particles described above.

Optional steps include milling the starting material before preparing the slurry with the binder. The type of milling will depend on the starting material and the desired final product. Typical milling operations are well known wet and dry milling procedures. Additional optional steps include milling the binder material separately before adding to the slurry and/or either stirring, mixing or milling the slurry after the support particles and binder are combined. These are process options that must be determined based on the materials used and the applications of the final product. The necessity of these for a given selection of materials can be determined without undue experimentation.

For example, depending on the silica binder used, it may be desirable to mill the slurry (or the binder separately) to act as a more efficient binder system.

Furthermore, it may be desirable to calcine the resulting aggregate to remove any residual water for certain applications, e.g., when the aggregate is used to support Ziegler-Natta and/or Metallocene catalyst systems. Typical calcination can be carried out at 150 - 900 °C for up to 24 hours.

Ziegler-Natta, Metallocene, and Ni, Pd based complexes catalysts, cocatalyst and activator components can be impregnated in and on the supports of the present invention using any number of known techniques. Where suitable (e.g., non-aqueous slurries) the catalytic components can be added to the slurry before spray drying. Typically, the components are deposited on the aggregate after calcining. With respect to Ziegler-Natta catalyst system it is possible to use metal oxide -silica gels as the source of the active catalyst metal source, e.g. titania containing silica cogels or tergels .

"Metallocene" is defined as an organometallic compound having a transition metal, including rare earth metals, in coordination with members of at least one five-member carbon ring, heterosubstituted five-member carbon ring, or a bridged (ansa) ligand defined as two cyclic moieties capable of coordinating to the transition or rare earth metals. Wherein the ansa bridge B, can be carbon, silicon, phosphorus, sulfur, oxygen, nitrogen, germanium, species such as CH₂CH₂ (ethylene), Me₂Si (dimethylsilyl), Ph₂Si (diphenylsilyl) Me₂C (isopropylidene), Ph₂P (diphenylphosphoryl) Me₂SiSiMe₂ (tetramethyldisilane) and the like. In particular, preferred metallocenes are derivatives of a cyclopentadiene (Cp), including cyclopentadienyl, substituted cyclopentadienyls, indenyl, fluorenyl, tetrahydroindenyl, and 1,1-disubstituted silacyclopentadienes, phosphocyclopentadienes, 1-metallocyclopenta-2,4-dienes, bis(indenyl)ethane and mixtures thereof. Metallocene catalyst are typically activated by combining the active metal species with borate or aluminoxane compounds well known in the art.

The transition metal component of the metallocene is selected from Groups IIIB through Group VIII of the Periodic Table and mixtures thereof, preferably Group IIIB, IVB, VB, VIB and rare earth (i.e., lanthanides and actinides) metals, and most preferably titanium, zirconium, hafnium, chromium, vanadium, samarium and neodymium. Of these Ti, Zr, and Hf are most preferable.

"Ziegler-Natta" ("ZN") is defined as a transition metal (Group IIIB through VIIIB) halide, alkyl, aryl, or alkoxy compounds and mixtures thereof in combination with a Group I through III elements of the Periodic Table. A typical example is TiCl₄ and AlEt₃. Preferred Ziegler-Natta systems are those employing a complex of magnesium chloride/titanium halide or alkoxy compound and an aluminum alkyl deposited on the novel supports of this invention. Methods of producing catalysts are known in the art. Electron donors may also be used in Ziegler-Natta catalyts systems of the present invention and include, esters, ethers, amines, silanes and alcohols and mixtures thereof.

It is also believed that the compositions and methods described herein are suitable for use with catalysis that are palladium and nickel-based complexes (e.g., Ni, Pd coordinated to diimine (non-cyclopentadienyl, nitrogen-containing) ligands) described in Brookhart, Johnson, and Killian, J. Am Chem. Soc., 117, 6414 (1995). Typical versions of these catalysts are cationic and can be activated in ways similar to metallocenes using aluminoxane or borate co-catalysts.

Catalyst systems supported on the aggregate described herein are useful to produce polymers using solution polymerization, slurry polymerization or gas phase polymerization techniques. As used herein the term polymerization includes copolymerization and terpolymerization and the terms olefins and olefinic monomers include olefins, alpha-olefins, diolefins, stryrenic monomers, acetylenically unstaturated monomers, cyclic olefins and mixtures thereof.

Methods and apparatus for effecting such polymerization reactions are well known. The catalyst according to the present invention can be used in similar amounts and under similar conditions known to olefin polymerization catalysts. Typically for the slurry process, the temperature is from approximately 0 °C to just below the temperature at which the polymer becomes soluble in the polymerization medium. For the gas phase process, the temperature is from approximately 0°C to just below the melting point of the polymer. For the solution process, the temperature is typically the temperature from which the polymer is soluble in the reaction medium up to approximately 275°C.

The pressure used can be selected from a relatively wide range of suitable pressures, e.g., from subatmospheric to about 137.8 MPa (20,000 psi). Suitable pressure is from atmospheric to about 6.89 MPa (1000 psi), and most preferred from 0.345 to 3.79 MPa (50 to 550 psi). In the slurry or particle form process, the process is suitably performed with a liquid inert diluent such as a saturated aliphatic hydrocarbon. The hydrocarbon is a C₄ to C₁₀ hydrocarbon, e.g., isobutane or an aromatic hydrocarbon liquid such as benzene, toluene or xylene. The polymer is recovered directly from the gas phase process or by filtration or evaporation from the slurry process or evaporation of solvent from the solution process.

The support and catalyst system of the present invention is particularly suited for the gas phase and slurry phase polymerization processes and particularly useful for the production of polyethylene and polypropylene.

### Figures

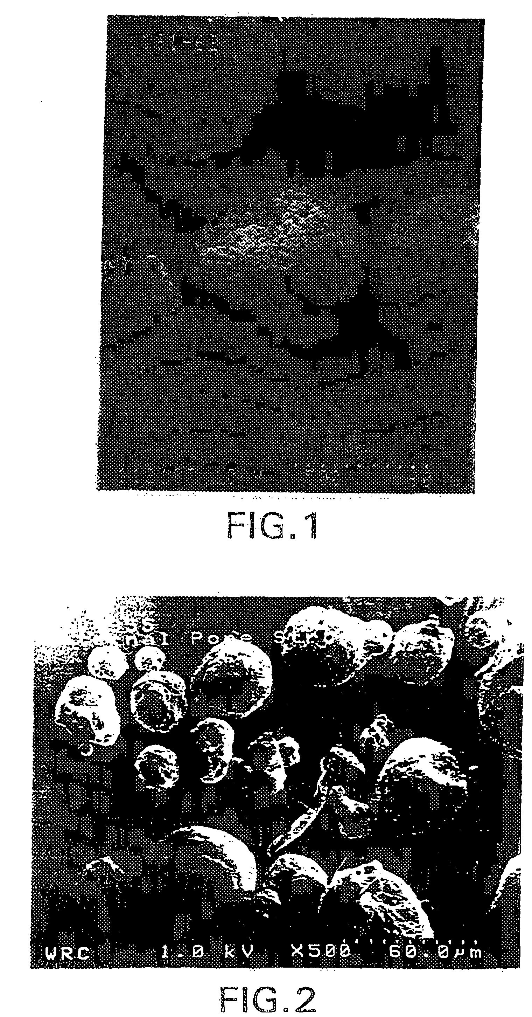

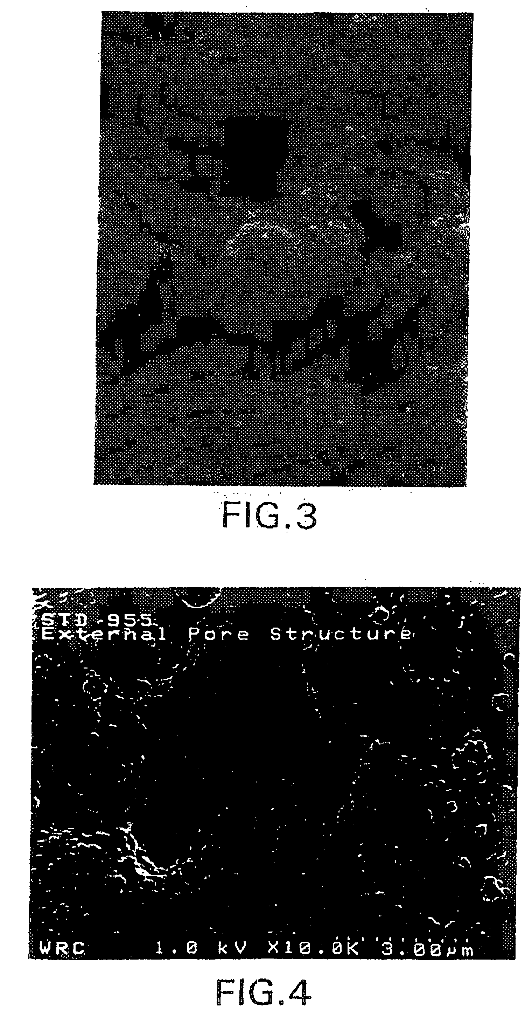

Figures 1-4 are electron microscope photographs of one embodiment of the present invention and of a spray dried agglomerated silica.
Figure 1 is a photographic image of particles from one embodiment (silica hydrogel support and milled silica hydrogel as binder) of the present invention. The photograph was taken with an electron microscope and represents a 500x magnification of the actual particles.
Figure 2 is a photographic image of particles made by spray drying of an aqueous mixture of hydrogel and silica and is typical of Davison 948. The photograph was taken with an electron microscope and represents a 500x magnification of the actual particles.
Figure 3 is a photographic image of particles from one embodiment (silica hydrogel support and milled silica hydrogel as binder) of the present invention. The photograph was taken with an electron microscope and represents a 10,000x magnification of the actual particles.
Figure 4 is a photographic image of particles made by spray drying of an aqueous mixture of hydrogel and silica and is typical of Davison 948. The photograph was taken with an electron microscope and represents a 10,000x magnification of the actual particles.
Figure 5 is a schematic illustration of the apparatus used in the AQI test.

### EXAMPLES

The examples below are illustrative of preferred embodiments of the present invention and are not meant to limit the scope of the claim herein.

Each of the following examples was prepared as follows, with the specific information for each material, and characteristics provided in Table 1. The supports of this invention were prepared by the process described herein. In particular, the slurries containing the support and binder materials of desired particle sizes were typically blended until a uniform mixture was obtained. The amount of support, binder and solvent used was selected to achieve the wt.% ratio of support to binder provided in Table 1. Water was the solvent used in each example.

The slurries (having a average particle size of under 30 µm were then spary dried. With respect to examples 6 and 8, the binder was coarsely ground before being mixed with the support material. The mixtures of support and binder materials were then comilled to prepare the spray dryer feed having an average particle size of under 10 microns (and 90% under 30 µm). A Niro spray dryer was used at the manufacture's standard operating conditions.

Catalysts were prepared by impregnating the aggregate support material thus made as provided in Tables 2 and 3. The polymers were obtained under the conditions provided below using a 2-liter Zipperclave reactor (constant temperature and pressure).

**Table 1.**

| Description of Aggregate Support | | | | | | | | |
|---|---|---|---|---|---|---|---|---|
| Example | Support Material | Support Part. Size⁺APS/ 90% | | Binder Material | wt % Support: Binder | Surface Area (m²/g) | Pore Volume (cc/g) | AQI |
| 1 | Aerogel | 5µ | 10 µ | Hydrogel | 12:4 | 382 | 1.62 | 41 |
| 2 | Aerogel | 3µ | 5 µ | Hydrogel | 9.75:3.25 | 381 | 1.56 | 31 |
| 3 | Azeo. Cogel Aerogel # | 5.2 µ | 8 | Hydrogel* | 10.7:3.5 | 395 | 1.44 | 48 |
| 4 | Azco. Cogel Aerogel# | 5.2 µ | 8 µ | Si/Ti Cogel** | 8:4 | 427 | 1.39 | 67 |
| 5 | Cogel Aerogel | 4.6 µ | 9 µ | Si/Ti Cogel ** | 11.8:3.93 | 373 | 1.15 | 36 |
| 6 | Aerogel | 5.3 µ | 8 µ | Hydrogel | 12.5:4.2 | 322 | 1.61 | 53 |
| 7 | Aerogel | 5.3 µ | 10 µ | Fumed Silica *** | 13.8:3.4 | 364 | 1.63 | 53 |
| 8 | Aerogel | 4.6 µ | 28 µ | Hydrogel | 10.0:3.7 | 573 | 1.34 | 65 |
| 9 | Precipitated Silica | 5 µ | 12 µ | Precipitated Silica Slurry | 7.5:2.5 | 476 | 1.27 | 34 |
| Notes: | | | | | | | | |
| Aerogels, cogels and precipitated silicas are available from Grace Davison, a business unit of W.R. Grace & Co. Except where noted, the binder materials are from the same base gel used to prepare the support (i.e., aerogels) materials. Binders were typically 35 wt % solid, 65 wt % water. | | | | | | | | |

| | | | | | | | | |
|---|---|---|---|---|---|---|---|---|
| *Silica hydrogel used in Example 3 was the same as that used in Example 6.*Silica hydrogel used in Example 3 was the same as that used in Example 6. | | | | | | | | |
| **Si/Ti Cogel binder used in Examples 4 and 5 was prepared by milling cogel hydrogel (nominal surface area = 400 m²/g, pore volume = 1.1 cc/g). | | | | | | | | |
| *** Fumed silica purchased from Cabot Corp., "Cab-o-Sil." | | | | | | | | |
| # Azeotropically dried Cogel of Silica/Ti. | | | | | | | | |
| ⁺µ = µm | | | | | | | | |

### Catalyst Example 10.

10.0 grams of support Example 1, previously calcined at 600 °C for 4 hours, was slurried in 50 mL of heptane. Dibutylmagnesium (20 mmol) was added dropwise and the slurry was stirred for 1 hour. Anhydrous hydrogen chloride was bubbled through the suspension for 10 minutes (or until an aliquot of the suspension was slightly acidic). Excess HCl was removed by purging the flask with argon for 10 minutes. The off-white slurry was treated with 2.9 mmol of TiCl₄ and stirred for 1 hour. Diethylaluminum chloride (DEAC, 25 mmol) was added dropwise and stirring continued for 2 hours. Volatiles were removed under vacuum to yield a free-flowing powder.

Catalyst Example 11. Prepared using the same procedure as Example 10 except employing 10.0 grams of support Example 2, previously calcined at 600 °C for 4 hours.

Catalyst Example 12. Prepared using the same procedure as Example 10 except employing 10.0 grams of support Example 7, previously calcined at 600 °C for 4 hours.

Catalyst Example 13. Prepared using the same procedure as Example 10 except employing 10.0 grams of support Example 9, previously calcined at 600 °C for 4 hours.

Catalyst Example 14. Prepared using the same general procedure as Example 13 except employing the following amounts of reagents: 25.0 mmol of dibutylmagnesium; 3.6 mmol of TiCl₄; 31.0 mmol of DEAC.

Catalyst Example 15. Prepared using the same procedure as Example 10 except employing 10.0 grams of support Example 8, previously calcined at 600 °C for 4 hours.

Catalyst Example 16. Prepared using the same procedure general procedure as Example 15 except employing the following amounts of reagents: 40.0 mmol of dibutylmagnesium; 5.8 mmol of TiCl₄; 50.0 mmol of DEAC.

Catalyst Example 17. Prepared using the same general procedure as Example 10 except employing 10.0 grams of support Example 8, previously calcined at 600 "C or 4 hours, and the following amounts of reagents: 25.0 mmol of dibutylmagnesium; 5.6 mmol of TiCl₄; 50.0 mmol of DEAC. Prior to removal of volatiles, 0.2 mL of 2,6-lutidine was added and the resulting slurry was stirred an additional 1 hour. Drying under vacuum again produced a free-flowing powder.

Comparative Example CE1. Prepared using the same procedure as Example 10 except employing 10.0 grams of Sylopol 948 previously calcined at 600 "C for 4 hours.

Comparative Example CE2. Prepared using the same procedure as Example CE1 except employing the following amounts of reagents: 40.0 mmol of dibutylmagnesium; 5.8 mmol of TiCl₄; 50.0 mmol of DEAC.

**Table 2**

| Description of the Catalyst Made and Polymer | | | | | | | | | |
|---|---|---|---|---|---|---|---|---|---|
| Example | Support Example | % Mg | % Ti | %Al | Rx T (°C) | Activity | MI | HLMI | MFR |
| 10 | 1 | 3.35 | 0.66 | 4.35 | 75 | 5400 | 0.97 | 38.4 | 39.5 |
| 11 | 2 | 3.41 | 0.69 | 3.9 | 75 | 5510 | 1.23 | 51.1 | 41.6 |
| 12 | 7 | 3.42 | 0.68 | 4.24 | 75 | 5040 | 1.04 | 39.3 | 37.8 |
| 13 | 9 | 2.92 | 0.6 | 3.62 | 75 | 4770 | 1.27 | 50.7 | 39.9 |
| 14 | 9 | 3.93 | 0.78 | 4.72 | 75 | 4430 | 1.4 | 55.2 | 39.4 |
| 15 | 8 | 3.51 | 0.71 | 4.31 | 75 | 4770 | 0.94 | 34.3 | 36.5 |
| 16 | 8 | 5.29 | 1.07 | 6.05 | 75 | 8710 | 0.69 | 24.7 | 35.8 |
| 17 | 8 | 3.18 | 1.05 | 6.47 | 75 | 5980 | 0.61 | 18.8 | 30.8 |
| CE1 | Sylopol 948 | 3.14 | 0.72 | 4.13 | 75 | 3300 | 0.55 | 20.8 | 37.8 |
| CE2 | Sylopol 948 | 5.14 | 1.05 | 5.8 | 75 | 3760 | 1.02 | 40.2 | 39.5 |

General Synthetic Procedures. In catalyst preparation, Schlenk and glove box techniques were used throughout to exclude water and oxygen. All solvents were thoroughly dried and degassed prior to use. Examples 10-17 & Comparative Examples, CE1 & 2: Polymerizations performed at 75°C 413 kPa (60 psig) H₂ partial pressure, 827kPa (120 psig) ethylene partial pressure. Catalyst amounts varied between 15-50 mg, corresponding to between 4.5 and 7.5 micromoles of Ti. Polymerizations were initiated by addition of 0.75 millimoles of triisobutyl aluminum (TiBAl). Activity is expressed as g polymer/g catalyst-hr.

Catalyst Example 18: 10.0 grams of the agglomerated cogel support Example 4 was slurried in 50 mL of heptane and treated with 20 mmol of butylethylmagnesium. Stirring was continued for 1 hour. Chlorotrimethylsilane (9 mL) was added and stirred for 30 minutes. Boron trichloride (20 mmol) was added slowly and stirring continued for an additional hour. The resulting solid was collected on a frit, washed twice with 50 mL of pentane and dried under vacuum at room temperature.

Catalyst Examples 19 and 20. Same general procedure for Example 18 except that 0.3 mL of 2,6-lutidine was added subsequent to boron trichloride and stirred an additional hour. The resulting solid was collected on a frit, washed twice with 50 mL of pentane and dried under vacuum at room temperature.

**Table 3**

| Example | Support Example | % Mg | % Ti | Rx T ("C) | Activity | MI | HLMI | MFR |
|---|---|---|---|---|---|---|---|---|
| 18 | 4 | 3.24 | 1.73 | 75 | 3450 | 1.66 | 60.9 | 36.7 |
| 19 | 4 | 3.07 | 1.72 | 75 | 2180 | 0.65 | 18.4 | 28.1 |
| 20 | 4 | 3.07 | 1.72 | 85 | 2470 | 1.9 | 50.1 | 26.4 |

Examples 17-19 (Table 3): Polymerizations performed at the indicated temperature, 413kPa (60 psig) H₂ partial pressure, 827 kPa (120 psig) ethylene partial pressure. Polymerizations were initiated by addition of 50 mg of catalyst and 0.75 millimoles of TiBAl. Activity is expressed as g polymer/g catalyst-hr.

The Melt index of the final resin was determined using ASTM Proc D1238, Cond.E, Procedure A; High Load Melt Index by ASTM Proc. D1238, Cond. F, Procedure B; MFR is calculated by dividing the HLMI by the MI.

The AQI (Attrition Quality Test) is a Grace Davison test used to rank the hardness of a material. The quality index is a measure of the material's resistance to particle size reduction under controlled conditions of turbulent motion. AQI represents the weight percent of the over 16 µm size fraction which is reduced to particle sizes less than 16 µm under the test conditions.

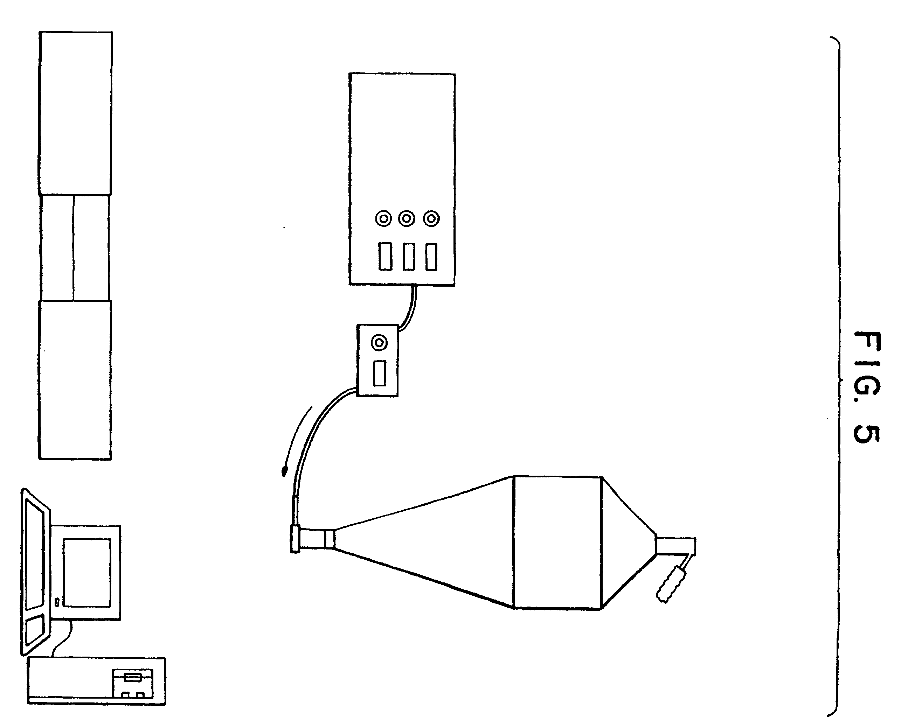

The baseline of the 0-16 µm fraction is determined by the Mastersizer (tradename of Malvern Corp) particle size analyzer. A 5 gram sample of material is placed in a covered cup subjected to a tangential jet of air at a rate of 9 liters per minute at a 60% Relative Humidity introduced through an orifice fixed at the bottom of the covered cup for a period of 30 minutes. The fines generated by the attrition mechanism and the coarse particles left in the cup after attrition are combined and mixed. The percent of 0-16 µm fines after attrition are then determined on the mixture by the Mastersizer particle size analyzer. A schematic illustration of the equipment used in this test is provided in Figure 5.
The calculation is as follows.
AQI=% less than 16 µm minus % less than 16 µm pre-attrition test.

## Claims

1. Catalyst support agglomerate particles readily fragmentable during a polymerisation reaction comprising:
(A) inorganic oxide selected from the group consisting of talc, silica, titania, silica-alumina, silica-chromia, silica-chromia-titania, silica-titania, silica-titania-alumina, zirconia, aluminum phosphate gel and mixtures thereof, and
(B) milled hydrogel binder, wherein
(1) the support agglomerate particles are derived from spray drying an aqueous slurry comprising inorganic oxide, binder, and solvent;
(2) the support agglomerate particles possess:
(i) an average particle size in the range of about 5 to about 250 µm;
(ii) a surface area of from about 100 to about 1000m² per gram;
(iii) a pore volume of from about 0.5 to 3.0 cc/g in pores having a pore diameter under 100 nm; and
(iv) an AQI from 15 to 70; and
(3) the constituent inorganic oxide particles from which the agglomerate support particles are derived have an average particle size, prior to spray drying, of from about 1 to 25 µm.

2. The agglomerate particles of claim 1 wherein the support agglomerate particles possess a surface area of from 150 to 800 m²/g, and an average particle size of 10 to 120 µm.

3. The agglomerate particles of claim 1 or 2, wherein the inorganic oxide is silica gel and the binder is milled silica gel.

4. The agglomerate particles of claim 3 wherein the inorganic oxide is milled silica gel.

5. A method for making support agglomerate particles which comprises:
(A) providing an aqueous slurry comprising inorganic oxide support particles having an average particle size of 1 to 25 µm, and milled silica gel binder particles, wherein the inorganic oxide support particles are selected from the group consisting of talc, silica, titania, silica-alumina, silica-chromia, silica-chromia-titania, silica-titania, silica-titania-alumina, zirconia, aluminum, phosphate gel, and mixtures thereof; and
(B) spray drying the slurry prepared in accordance with step (A) to form readily fragmentable agglomerate particles having an average particle size in the range of about 5 to about 250 µm; a surface area of from about 100 to about 1000 m² per gram; a pore volume of from about 0.5 to 3.0 cc/g in pores having a pore diameter under 100 nm and an AQI from 15 to 70.

6. The method of claim 5 wherein the inorganic oxide support particles are selected from the group consisting of silica hydrogel, silica, cogel, silica tergel, and mixtures thereof.

7. The method of claim 6 wherein the inorganic oxide support particles are silica hydrogel having an average particle size of 1 to 10 µm.

8. A catalyst composition comprising catalyst support agglomerate particles and a catalytically active metal component selected from the group consisting of chromium compound, Ziegler-Natta, metallocene, Ni based complexes, Pd based complexes and mixtures thereof wherein the catalyst support agglomerate particles comprise:
(A) inorganic oxide selected from the group consisting of talc, silica, titania, silica-alumina, silica-chromia, silica-chromia-titania, silica-titania, silica-titania-alumina, zirconia, aluminum phosphate gel and mixtures thereof, and
(B) milled hydrogel binder,
(C) and wherein
(1) the support agglomerate particles are derived from spray drying an aqueous slurry comprising inorganic oxide, binder, and solvent;
(2) the support agglomerate particles possess:
(i) an average particle size in the range of about 5 to about 250 µm;
(ii) a surface area of from about 100 to about 1000 m² per gram;
(iii) a pore volume of from about 0.5 to 3.0 cc/g in pores having a pore diameter under 100 nm; and
(iv) an AQI from 15 to 70; and
(3) the constituent inorganic oxide particles from which the agglomerate support particles are derived have an average particle size, prior to spray drying, of from about 1 to 25 µm.

9. The catalyst composition of claim 8 wherein the catalytically active metal component is selected from the group consisting of organometallic compounds having a transition metal in coordination with at least one member selected from the group consisting of five-membered carbon ring, heterosubstituted five-membered carbon ring, or a bridged (ansa) ligand; a Group IIIB through VIIIB transition metal halide, alkyl, aryl, or alkoxy compounds and mixtures thereof in combination with a Group I through III element containing compound; chromium acetate, chromium nitrate, chromium acetylacetonate, Ni based complexes, Pd based complexes; and mixtures of any of the forgoing catalytically active materials.

10. The catalyst composition of claim 9, wherein the support agglomerate particles have an average size of from 10 to 120 µm, and a surface area of from 150-800 m²/g.

11. The catalyst composition of claim 10, wherein the support agglomerate particles are silica and have a surface area of from 200-700 m²/g and the constituent particles from which the support agglomerate particles are derived have an average particle size of from 1 to 10 µm.

12. A method of producing a catalyst composition comprising the steps of:
(A) preparing an aqueous slurry of inorganic oxide support particles and milled hydrogel binder, wherein the support particles are selected from the group consisting of talc, silica, titania, silica-alumina, silica-chromia, silica-chromia-titanic, silica-titania, silica-titania-alumina, zirconia, aluminum phosphate gel, and mixtures thereof, and the average size of the support particles is from 1 to 25 µm;
(B) spray drying the slurry from step (A) to create agglomerate particles having a surface area from about 100-1000 m²/g, a particle size of from 5-250 µm, and an AQI of from 15 to 70; and
(C) providing catalytically active material in at least one of the following ways:
(1) adding catalytically active material and, optionally, appropriate co-catalysts or activator for the catalytically active material, to the slurry before spray drying; or
(2) impregnating the resultant agglomerate particles with a catalytically active material and, optionally, appropriate co-catalyst or activator for the catalytically active material, to the slurry after spray drying.

13. The method of claim 12 wherein the catalytically active material is selected from organometallic compounds having a transition metal in coordination with at least one member selected from the group consisting of five-membered carbon ring, heterosubstituted five-membered carbon ring, and bridged (ansa) ligand; Group IIIB through Group VIIIB transition metal halide, alkyl, aryl, or alkoxy compounds, and mixtures thereof, in combination with a Group I through Group III element containing compound; chromium acetate; chromium nitrate; chromium acetylacetonate; Ni based complexes; Pd based complexes; and mixtures of any of the foregoing catalytically active materials.

## Patentansprüche

1. Katalysatorträgeragglomeratteilchen, die während einer Polymerisationsreaktion leicht fragmentierbar sind und
(A) anorganisches Oxid ausgewählt aus der Gruppe bestehend aus Talk, Siliciumdioxid, Titandioxid, Siliciumdioxid-Aluminiumoxid, Siliciumdioxid-Chromoxid, Siliciumdioxid-Chromoxid-Titandioxid, Siliciumdioxid-Titandioxid, Siliciumdioxid-Titandioxid-Aluminiumoxid, Zirkoniumoxid, Aluminiumphosphatgel und Mischungen derselben, und
(B) gemahlenes Hydrogelbindemittel umfassen, wobei
(1) die Trägeragglomeratteilchen sich von der Sprühtrocknung einer wässrigen Aufschlämmung ableiten, die anorganisches Oxid, Bindemittel und Lösungsmittel umfasst,
(2) die Trägeragglomeratteilchen
(i) eine durchschnittliche Teilchengröße im Bereich von etwa 5 bis etwa 250 µm aufweisen,
(ii) eine Oberfläche von etwa 100 bis etwa 1000 m²/g aufweisen,
(iii) ein Porenvolumen von etwa 0,5 bis 3,0 cm³/g in Poren mit einem Porendurchmesser unter 100 nm aufweisen und
(iv) ein AQI von 15 bis 70 aufweisen, und
(3) die als Bestandteil vorhandenen anorganischen Oxidteilchen, von denen sich die Agglomeratträgerteilchen ableiten, eine durchschnittliche Teilchengröße vor der Sprühtrocknung von etwa 1 bis 25 µm aufweisen.

2. Agglomeratteilchen nach Anspruch 1, bei denen die Trägeragglomeratteilchen eine Oberfläche von 150 bis 800 m²/g und eine durchschnittliche Teilchengröße von 10 bis 120 µm besitzen.

3. Agglomeratteilchen nach Anspruch 1 oder 2, bei denen das anorganische Oxid Kieselgel ist und das Bindemittel gemahlenes Kieselgel ist.

4. Agglomeratteilchen nach Anspruch 3, bei denen das anorganische Oxid gemahlenes Kieselgel ist.

5. Verfahren zur Herstellung von Trägeragglomeratteilchen, bei dem
(A) eine wässrige Aufschlämmung bereitgestellt wird, die anorganische Oxidträgerteilchen mit einer durchschnittlichen Teilchengröße von 1 bis 25 µm und gemahlene Kieselgelbindemittelteilchen umfasst, wobei die anorganischen Oxidträgerteilchen ausgewählt sind aus der Gruppe bestehend aus Talk, Siliciumdioxid, Titandioxid, Siliciumdioxid-Aluminiumoxid, Siliciumdioxid-Chromoxid, Siliciumdioxid-Chromoxid-Titandioxid, Siliciumdioxid-Titandioxid, Siliciumdioxid-Titandioxid-Aluminiumoxid, Zirkoniumoxid, Aluminiumoxid, Phosphatgel und Mischungen derselben, und
(B) die gemäß Schritt (A) hergestellte Aufschlämmung sprühgetrocknet wird, um leicht fragmentierbare Agglomeratteilchen zu bilden, die eine durchschnittliche Teilchengröße im Bereich von etwa 5 bis etwa 250 µm, eine Oberfläche von etwa 100 bis etwa 1000 m²/g, ein Porenvolumen von etwa 0,5 bis 3,0 cm³/g in Poren mit einem Porendurchmesser unter 100 nm und ein AQI von 15 bis 70 aufweisen.

6. Verfahren nach Anspruch 5, bei dem die anorganischen Oxidträgerteilchen ausgewählt sind aus der Gruppe bestehend aus Siliciumdioxidhydrogel, Siliciumdioxidcogel, Siliciumdioxidtergel und Mischungen derselben.

7. Verfahren nach Anspruch 6, bei dem die anorganischen Oxidträgerteilchen aus Siliciumdioxidhydrogel sind und eine durchschnittliche Teilchengröße von 1 bis 10 µm aufweisen.

8. Katalysatorzusammensetzung, die Katalysatorträgeragglomeratteilchen und katalytisch aktive Metallkomponente ausgewählt aus der Gruppe bestehend aus Chromverbindung, Ziegler-Natta, Metallocen, Ni-basierten Komplexen, Pd-basierten Komplexen und Mischungen derselben, wobei die Katalysatorträgeragglomeratteilchen:
(A) anorganisches Oxid ausgewählt aus der Gruppe bestehend aus Talk, Siliciumdioxid, Titandioxid, Siliciumdioxid-Aluminiumoxid, Siliciumdioxid-Chromoxid, Siliciumdioxid-Chromoxid-Titandioxid, Siliciumdioxid-Titandioxid, Siliciumdioxid-Titandioxid-Aluminiumoxid, Zirkoniumoxid, Aluminiumphosphatgel und Mischungen derselben, und
(B) gemahlenes Hydrogelbindemittel umfassen,
wobei
(C)
(1) die Trägeragglomeratteilchen sich von der Sprühtrocknung einer wässrigen Aufschlämmung ableiten, die anorganisches Oxid, Bindemittel und Lösungsmittel umfasst,
(2) die Trägeragglomeratteilchen
(i) eine durchschnittliche Teilchengröße im Bereich von etwa 5 bis etwa 250 µm besitzen,
(ii) eine Oberfläche von etwa 100 bis etwa 1000 m²/g besitzen,
(iii) ein Porenvolumen von etwa 0,5 bis 3,0 cm³/g in Poren mit einem Durchmesser unter 100 nm besitzen, und
(iv) ein AQI von 15 bis 70 besitzen, und
(3) die als Bestandteil vorhandenen anorganischen Oxidteilchen, von denen sich die Agglomeratträgerteilchen ableiten, eine durchschnittliche Teilchengröße vor der Sprühtrocknung von etwa 1 bis 25 µm aufweisen.

9. Katalysatorzusammensetzung nach Anspruch 8, bei dem die katalytisch aktive Metallkomponente ausgewählt ist aus der Gruppe bestehend aus organometallischen Verbindungen mit einem Übergangsmetall in Koordination mit mindestens einem Mitglied ausgewählt aus der Gruppe bestehend aus 5-gliedrigem Kohlenstoffring, heterosubstituiertem 5-gliedrigem Kohlenstoffring, überbrücktem (ansa) Ligand, Gruppe IIIB bis VIIIB Übergangsmetallhalogenid, Alkyl-, Aryl- oder Alkoxyverbindungen und Mischungen derselben in Kombination mit einer Gruppe I bis III Element enthaltenden Verbindung, Chromacetat, Chromnitrat, Chromacetylacetonat, Ni-basierten Komplexen, Pd-basierten Komplexen und Mischungen von irgendwelchen der zuvor genannten katalytisch aktiven Materialien.

10. Katalysator nach Anspruch 9, bei dem die Trägeragglomeratteilchen eine durchschnittliche Größe von 10 bis 120 µm und eine Oberfläche von 150 bis 800 m²/g aufweisen.

11. Katalysatorzusammensetzung nach Anspruch 10, bei der die Trägeragglomeratteilchen aus Siliciumdioxid sind und eine Oberfläche von 200 bis 700 m²/g aufweisen und bei der die Bestandteilsteilchen, von denen sich die Trägeragglomeratteilchen ableiten, eine durchschnittliche Teilchengröße von 1 bis 10 µm aufweisen.

12. Verfahren zur Herstellung einer Katalysatorzusammensetzung, bei der
(A) eine wässrige Aufschlämmung von anorganischen Oxidträgerteilchen und gemahlenem Hydrogelbindemittel hergestellt wird, wobei die Trägerteilchen ausgewählt sind aus der Gruppe bestehend aus Talk, Siliciumdioxid, Titandioxid, Siliciumdioxid-Aluminiumoxid, Siliciumdioxid-Chromoxid, Siliciumdioxid-Chromoxid-Titandioxid, Siliciumdioxid-Titandioxid, Siliciumdioxid-Titandioxid-Aluminiumoxid, Zirkoniumoxid, Aluminiumphosphatgel und Mischungen derselben, und wobei die durchschnittliche Größe der Trägerteilchen 1 bis 25 µm beträgt,
(B) die Aufschlämmung aus Schritt (A) sprühgetrocknet wird, um Agglomeratteilchen herzustellen, die eine Oberfläche von etwa 100 bis 1000 m²/g, eine Teilchengröße von 5 bis 250 µm und ein AQI von 15 bis 70 aufweisen, und
(C) katalytisch aktives Material auf mindestens einem der folgenden Wege bereitgestellt wird:
(1) durch Zugabe von katalytisch aktivem Material und gegebenenfalls geeigneten Co-Katalysatoren oder Aktivator für das katalytische aktive Material zu der Aufschlämmung vor der Sprühtrocknung, oder
(2) durch Imprägnierung der resultierenden Agglomeratteilchen mit einem katalytischen aktivem Material und gegebenenfalls geeignetem Co-Katalysator oder Aktivator für das katalytisch aktive Material in die Aufschlämmung nach der Sprühtrocknung.

13. Verfahren nach Anspruch 12, bei dem das katalytisch aktive Material ausgewählt ist aus organometallischen Verbindungen mit einem Übergangsmetall in Koordination mit mindestens einem Mitglied ausgewählt aus der Gruppe bestehend aus 5-gliedrigem Kohlenstoffring, heterosubstituiertem 5-gliedrigem Kohlenstoffring und überbrücktem (ansa) Ligand, Gruppe IIIB bis Gruppe VIIIB Übergangsmetallhalogenid, Alkyl-, Aryl- oder Alkoxyverbindungen und Mischungen derselben in Kombination mit einer Gruppe I bis III Element enthaltenden Verbindung, Chromacetat, Chromnitrat, Chromacetylacetonat, Ni-basierten Komplexen, Pd-basierten Komplexen und Mischungen von irgendwelchen der zuvor genannten katalytisch aktiven Materialien.

## Revendications

1. Particules de support de catalyseur en agglomérat facilement fragmentables pendant une réaction de polymérisation comprenant :
(A) un oxyde inorganique sélectionné dans le groupe consistant en talc, silice, oxyde de titane, alumino-silicate, oxyde de curome-silice, oxyde de chrome-titane-silice, oxyde de titane-silice, oxyde de titane-alumine-silice, oxyde de zirconium, gel de phosphate d'ammonium et leurs mélanges
(B) un liant d'hydrogel broyé, où
(1) les particules de support en agglomérat sont dérivées par séchage par pulvérisation d'une bouillie aqueuse comprenant l'oxyde organique, le liant et un solvant ;
(2) les particules de support en agglomérat possèdent :
(i) une dimension moyenne de particule dans la gamme d'environ 5 à environ 250 µm ;
(ii) une aire superficielle à environ 100 à environ 1000 m² par gramme ;
(iii) un volume des pores d'environ 0,5 à 3,0 cc/g en pores ayant un diamètre des pores en dessous de 100 nm ; et
(iv) AQI de 15 à 70 ; et
(3) les particules d'oxyde organique constituantes d'où les particules de support en agglomérat sont dérivées ont une dimension moyenne de particule avant séchage par pulvérisation d'environ 1 à 25 µm.

2. Particules en agglomérat de la revendication 1 où les particules de support en agglomérat possèdent une aire superficielle de 150 à 800 m²/g et une dimension moyenne des particules de 10 à 120 µm.

3. Particules en agglomérat de la revendication 1 ou 2,
où l'oxyde inorganique est du gel de silice et le liant est du gel de silice broyé.

4. Particules en agglomérat de la revendication 3 où l'oxyde inorganique est du gel de silice broyé.

5. Méthode de production de particules de support en agglomérat qui comprend :
(A) la production d'une bouillie aqueuse comprenant des particules de support d'un oxyde inorganique ayant une dimension moyenne de particule de 1 à 25 µm et des particules d'un liant de gel de silice broyé, où les particules de support d'un oxyde inorganique sont sélectionnées dans le groupe consistant en talc, silice, oxyde de titane, alumino-silicate, oxyde de chrome-silice, oxyde de groupe-titane-silice, oxyde de titane-silice, oxyde de titane-alumine-silice, oxyde de zirconium, aluminium, gel de phosphate et leurs mélanges ; et
(B) le séchage par pulvérisation de la bouillie préparée selon l'étape (A) pour former des particules en agglomérat facilement fragmentables ayant une dimension moyenne de particule dans la gamme d'environ 5 à environ 250 µm ; une aire superficielle d'environ 100 à 1000 m² par gramme, un volume des pores d'environ 0,5 à 3,0 cc/g en pores ayant un diamètre des pores en dessous de 100 nm et AQI de 15 à 70.

6. Méthode de la revendication 5 où les particules de support d'oxyde inorganique sont sélectionnées dans le groupe consistant en hydrogel de silice, silice, cogel, tergel de silice et mélanges.

7. Méthode de la revendication 6 où les particules de support d'un oxyde inorganique sont un hydrogel de silice ayant une dimension moyenne de particule de 1 à 10 µm.

8. Composition de catalyseur comprenant des particules de support de catalyseur en agglomérat et un composant de métal catalytiquement actif sélectionné dans le groupe consistant en composé de chrome, Ziegler-Natta, métallocène, complexes à base de Ni, complexes à base de Pd et mélanges où les particules de support de catalyseur en agglomérat comprennent :
(A) un oxyde inorganique sélectionné dans le groupe consistant en talc, silice, oxyde de titane, alumino-silicate, oxyde de chrome-silice, oxyde de chrome-titane-silice, oxyde de titane-silice, oxyde de titane-alumine-silice, oxyde de zirconium, gel de phosphate d'aluminium et leurs mélanges
(B) un liant d'hydrogel broyé ;
(C) et où
(1) les particules de support en agglomérat sont dérivées par séchage par pulvérisation d'une bouillie aqueuse comprenant l'oxyde inorganique, le liant et un solvant.
(2) les particules de support en agglomérat possèdent
(i) une dimension moyenne de particule dans la gamme d'environ 5 à environ 250 µm ;
(ii) une aire superficielle d'environ 100 à environ 1000 m² par gramme ;
(iii) un volume des pores d'environ 0,5 à 3,0 cc/g en pores ayant un diamètre des pores en dessous de 100 mm ; et
(iv) AQI de 15 à 70 ; et
(3) les particules d'oxyde inorganique constituantes d'où les particules de support en agglomérat sont dérivées ont une dimension moyenne de particule, avant séchage par pulvérisation d'environ 1 à 25 µm.

9. Composition de catalyseur de la revendication 8 où le composant de métal catalytiquement actif est sélectionné dans le groupe consistant en composés organo- métalliques ayant un métal de transition en coordination avec au moins un membre sélectionné dans le groupe consistant en cycle de carbone à cinq membres, cycle de carbone à cinq membres hétéro-substitué ou un ligand ponté (ansa) ; un halogénure d'un métal de transition du Groupe IIIB à VIIIB, des composés d'alkyle, aryle, ou alcoxy et mélanges de ceux-ci en combinaison avec un composé contenant un élément du Groupe I à III ; de l'acétate de chrome, du nitrate de chrome, de l'acétylacétonate de chrome, des complexes à base de Ni, des complexes à base de Pd ; et mélanges de chacune des matières catalytiquement actives qui précèdent.

10. Composition de catalyseur de la revendication 9 où les particules de support en agglomérat ont une dimension moyenne de 10 à 120 µm et une aire superficielle de 150 à 800 m²/g.

11. Composition de catalyseur de la revendication 10 où les particules de support en agglomérat sont de la silice et ont une aire superficielle de 200-700 m²/g et les particules constituantes d'où sont dérivées les particules de support en agglomérat ont une dimension moyenne de particule de 1 à 10 µm.

12. Méthode de production d'une composition de catalyseur comprenant les étapes de :
(A) préparer une bouillie aqueuse de particules de support d'un oxyde inorganique et d'un liant d'hydrogel broyé, où les particules de support sont sélectionnées dans le groupe consistant en talc, silice, oxyde de titane, alumino-silicate, oxyde de chrome-silice, oxyde de chrome titane-silice, oxyde de titane-silice, oxyde de titane-alumine-silice, oxyde de zirconium, gel de phosphate d'aluminium et leurs mélanges et la dimension moyenne des particules de support et de 1 à 25 µm ;
(B) sécher par pulvérisation la bouillie de l'étape (A) pour créer des particules en agglomérat ayant une aire superficielle d'environ 100-1000 m²/g, une dimension de particule de 5-250 µm et AQI de 15 à 70 ; et
(C) prévoir un matériau catalytiquement actif d'au moins l'une des façons qui suivent :
(1) ajouter le matériau catalytiquement actif et facultativement des co-catalyseurs appropriés ou un activateur pour le matériau catalytiquement actif, à la bouillie avant séchage par pulvérisation ;
(2) imprégner les particules résultantes en agglomérat d'un matériau catalytiquement actif et facultativement d'un co-catalyseur ou activateur approprié pour le matériau catalytiquement actif, à la bouillie après séchage par pulvérisation.

13. Méthode de la revendication 12 où le matériau catalytiquement actif est sélectionné parmi des composés organo-métalliques ayant un métal de transition en coordination avec au moins un membre sélectionné dans le groupe consistant en cycle de carbone à cinq membres, cycle de carbone à cinq membres hétéro-substitué et ligand ponté (ansa) ; halogénure d'un métal de transition du Groupe IIIB au Groupe VIIIB, composés d'alkyle, aryle ou alcoxy, et leurs mélanges, en combinaison avec un composé contenant un élément du Groupe I au Groupe III ; acétate de chrome, nitrate de chrome, acétylacétonate de chrome ; complexes à base de Ni, complexes à base de Pd et mélanges de chacun des matériaux catalytiquement actifs qui précèdent.
